# EUROPEAN PATENT SPECIFICATION

(11) **EP 4 467 827 B1**
(45) Date of publication and mention of the grant of the patent: **02.07.2025**
(21) Application number: 24172259.4
(22) Date of filing: 24.04.2024
(51) Int. Cl.: F16B 45/02

(54) **CARABINER WITH IMPROVED LOCK**
KARABINER MIT VERBESSERTEM SCHLOSS
MOUSQUETON À VERROU AMÉLIORÉ

(30) Priority: 22.05.2023 IT 202300010284
(43) Date of publication of application: 27.11.2024
(73) Proprietor: OBER ALP S.p.A., 39100 - Bolzano (IT)
(72) Inventor: RESCH, Egon, I-39100 BOLZANO (IT)
(74) Representative: Mitola, Marco

(56) References cited:
- FR-A1- 2 766 884
- US-A1- 2002 050 032
- ANONYMOUS: "24 Innovative Carabiners - Climbing", 1 December 2022 (2022-12-01), XP093105056, Retrieved from the Internet <URL:https://web.archive.org/web/20221201004706/https://www.climbing.com/news/24-innovative-carabiners/> [retrieved on 20231123]

## Description

### FIELD OF APPLICATION

The present invention relates to a carabiner with an improved closure, in particular for ropes and climbing harnesses.

### PRIOR ART

There are various solutions of carabiners in the art, having the main body with a 'C' configuration, and a closing element, rotating, hinged at the lower end of said 'C', so as to pass from a closing configuration, wherein it connects the free ends of said 'C' portion of the main body to each other, to an opening configuration wherein it allows a cord or rope to be inserted from the side of the upper end of said 'C' portion wherein the closing element is not hinged.

The transition from the opening configuration to the closing configuration and vice versa is elastic: in other words, for obvious safety reasons, the closing element is subjected to the action of a spring that affects it elastically in the closing configuration.

In order to obtain this elastic return effect, the closing element, at the lower free end, is known to interlock at two points that are offset therebetween: in this way, the provision of two distinct centers of rotation confers the elastic return to the closing element.

A further critical point of the closing element is the coupling thereof to the upper free end of the 'C' portion; such coupling must in fact be secure insofar as any pulling action exerted by the rope must not in any way allow for the accidental opening of the closing element.

For this purpose, the upper free end may be provided with a protrusion that acts as an undercut for the closing element, preventing it from accidentally opening outwards, i.e. away from the 'C' portion.

In addition, it is necessary to prevent said 'C' portion from opening due to excessive traction, i.e. preventing the two ends of the 'C' portion from moving away from each other thereby resulting in the irreversible opening of the carabiner. To this end, it is important that when in a closing configuration the closing element itself may contribute to the structural rigidity of the carabiner. A carabiner is known from US 2002/050032 A1.

The known solutions have some disadvantages and limitations.

The known solutions, in order to ensure the necessary structural rigidity, are in fact particularly heavy and expensive to implement. In particular, the closing element is a rather cumbersome and rigid structural element that forms a shape coupling with the free upper end of the 'C' portion.

The excessive weight of the closing element entails some drawbacks: in particular, in addition to being inconvenient for the user, it dangerously tends to open in the event of sudden collisions, due to the excessive inertia thereof.

### DISCLOSURE OF THE INVENTION

The need to solve the drawbacks and limitations mentioned with reference to the prior art is therefore felt.

Such need is satisfied by a carabiner with an improved lock for ropes according to claim 1.

### DESCRIPTION OF THE DRAWINGS

Further features and advantages of the present invention will become more apparent from the following detailed description of preferred, non-limiting embodiments thereof, wherein:

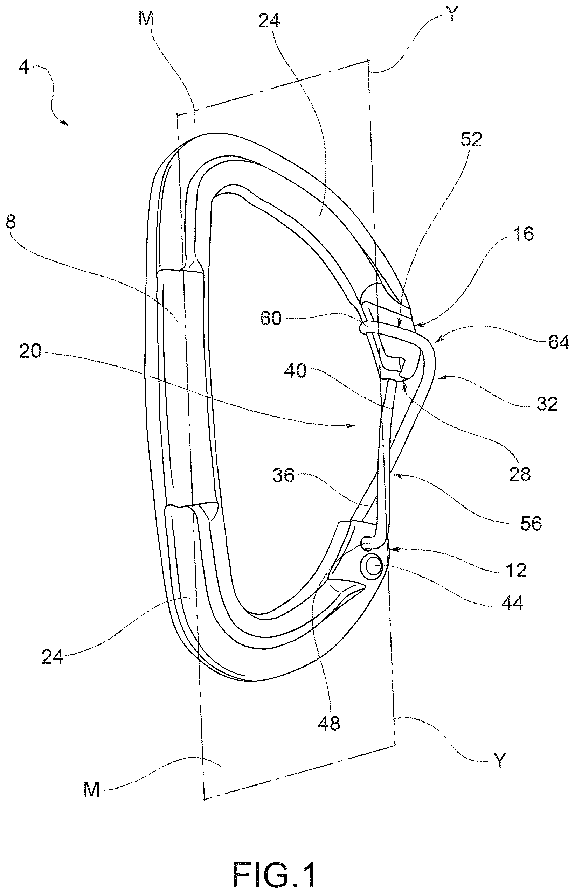

Figure 1 is a perspective view, in a closing configuration, of a carabiner according to one embodiment of the present invention;

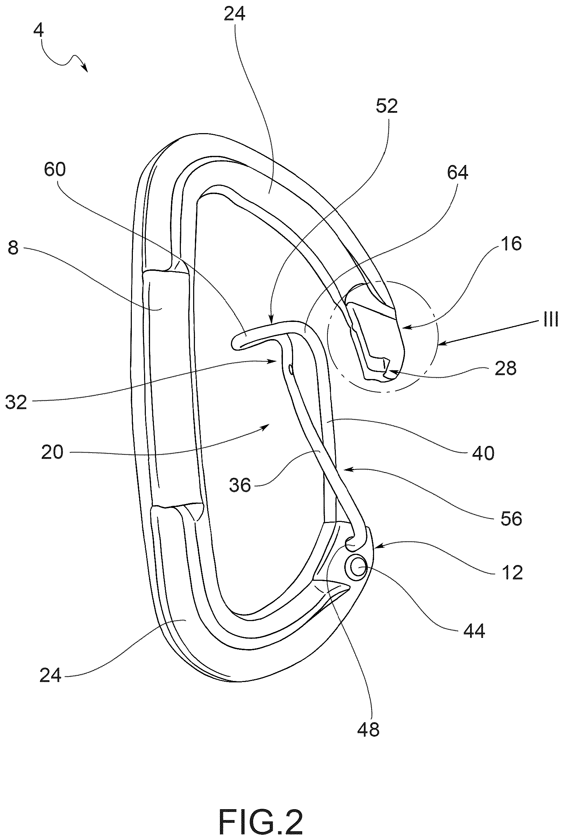

Figure 2 is a perspective view, in an opening configuration, of the carabiner in Figure 1;

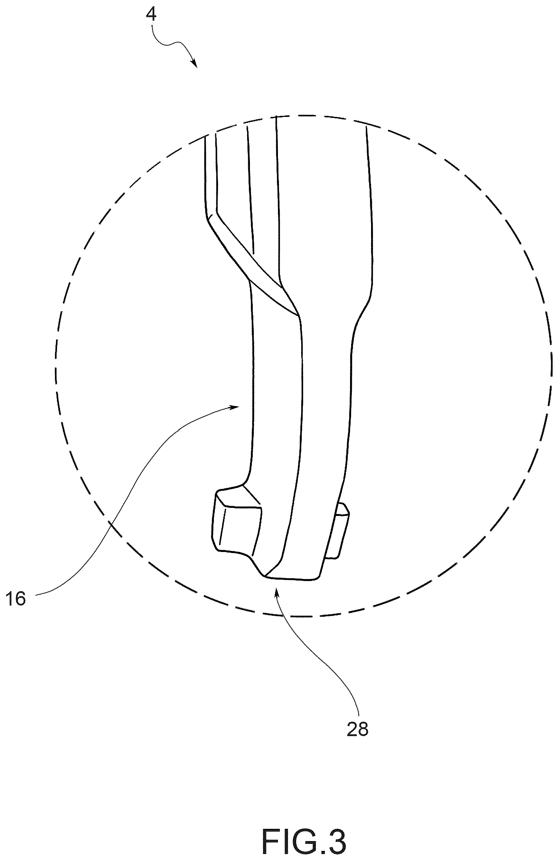

Figure 3 shows the enlarged detail III indicated in Figure 2.

Elements or parts of elements common to the embodiments described hereinafter will be indicated with the same numerical references.

### DETAILED DESCRIPTION

With reference to the aforesaid figures, an overall view of a carabiner for a cord or rope or a strap or a further carabiner (not shown) according to the present invention has been indicated collectively with 4.

The carabiner 4 comprises a main body 8 having a 'C' configuration, between a lower free end 12 and an upper free end 16 which identify an inlet opening 20 for the insertion of a cord or rope (not shown).

The shape of the main body 8 for the purposes of the present invention may be of any kind; the same applies to the material. According to one possible embodiment, the main body 8 comprises a stiffening rib 24, which is preferably continuous between said lower free end 12 and said upper free end 16.

The upper free end 16 is provided with at least one protrusion or nose 28, commonly referred to as a key-lock, as better described below.

The carabiner 4 further comprises a closing element 32, wedged in said lower free end 12 and configured so as to elastically pass from a closing configuration, in which it connects said lower free ends 12 and upper free ends 16 together, so as to prevent the passage (i.e. the entry and/or exit) of the cord through the inlet opening 20, to an opening configuration in which it deviates at least partially from the protrusion 28 of the upper free end 16 so as to allow for the passage of the cord through the inlet opening 20.

The closing element 32 comprises a first branch 36 and a second branch 40, having a first lower interlocking end 44 and a second lower interlocking end 48, respectively, interlocked to the lower free end 12 of the main body 8.

Preferably, said first lower interlocking end 44 and second lower interlocking end 48 are interlocked to the lower free end 12 of the main body 8, from opposite parts with respect to a centreline plane M-M of the carabiner 4.

Preferably, said first lower interlocking end 44 and second lower interlocking end 48 are interlocked at the lower free end 12 of the main body 8, in staggered positions from each other along a vertical direction parallel to said centreline plane M-M of the carabiner.

By virtue of this vertical offset, it is possible to obtain an elastic return effect of the closing element 32 so as to abut at least partially against the upper free end 16.

Furthermore, the first branch 36 and the second branch 40 each have an upper closing end 52 which, in a closing configuration, makes a shape coupling with said protrusion 28.

Said first branch 36 and second branch 40 are arranged in an X-shaped configuration, crossing at an intersecting point 56, on opposite sides with respect to a centreline plane M-M of the carabiner 4 connecting the upper free end 16 and the lower free end 12.

The upper closing ends 52 of said branches 36, 40 are connected to each other by means of an arc-shaped portion 60 which at least partially embraces said protrusion 28, in a closing configuration, on the side of the main body 8. Preferably, in a closing configuration, a clearance or gap 66 is provided between the arc-shaped portion 60 and the protrusion 28 with respect to a vertical direction Y-Y, parallel to said centreline plane M-M of the carabiner 4.

Said arc-shaped portion 60 also makes a front undercut that opposes the rotation of the closing element 32 on the opposite side to the main body 8.

Preferably, said intersecting point 56, is an intermediate point between the lower free ends 12 and upper free ends 16 of the main body 8 of the carabiner 4.

Preferably, at said intersecting point 56, said first branch 36 and second branch 40 overlap in contact with each other.

According to one possible embodiment, at said intersecting point 56, said first branch 36 and second branch 40 are mechanically connected to each other. Said mechanical connection may comprise, for example, a pin, a rivet, or also a weld.

Preferably, said protrusion 28 makes an undercut with respect to a vertical direction Y-Y, parallel to said centreline plane M-M of the carabiner 4, so as to oppose a divergence of the lower free ends 12 and upper free ends 16 of the main body 8 along said vertical direction Y-Y parallel to said centreline plane M-M.

Preferably, said first branch 36 and second branch 40 are integrally formed with each other; for example, said first branch 36 and second branch 40 are made by bending a single wire having a constant section.

According to one possible embodiment, said first branch 36 and second branch 40 have a constant section.

Preferably, but not necessarily, said section of the branches 36, 40 is circular or elliptical.

If the section is circular or elliptical.

Said section may also be rectangular or square.

According to one possible embodiment, said arc-shaped portion 60 has a necking 64 that at least partially embraces the upper free end 16 in the closing configuration of the carabiner 4. Said necking 64 confers further mechanical stiffening to the closing element 32, in particular, it facilitates both shape coupling between the arc-shaped portion 60 and the upper free end 16 so as to prevent the rotation of the closing element 32 away from the main body 8, and shape coupling between the arc-shaped portion 60 and the protrusion 28 so as to prevent the divergence between the lower free end 12 and the upper free end 16.

As may be appreciated from that which has been described, the present invention overcomes the drawbacks of the prior art.

In particular, the carabiner is particularly light and at the same time safe.

In fact, the closing element, essentially consisting of a suitably bent wire, is certainly very light compared to solutions of the prior art.

Such lightness also implies low inertia, so that the carabiner does not tend to open accidentally even in the event of strong accidental shocks, as is the case in some solutions of the prior art.

At the same time, safety is ensured by the special X-shaped configuration of the closing element.

In fact, by virtue of the crossing of the branches of the closing element, even in the event of strong traction that tends to diverge the free ends of the carabiner body, the crossed branches tend to approach each other and therefore to tighten more with respect to the relative free ends of the main body that they connect.

This deformation is particularly effective with respect to the upper free end equipped with the protrusion: in effect, said arch-shaped portion of the closing element tends to choke the protrusion more, ensuring extreme structural rigidity to the carabiner and thus increasing the undercut function along the vertical direction.

It is clear that in the case of a gap between the arc-shaped portion and the protrusion, the stiffening action of the closing element occurs after the gap is bridged due to elastic deformation of the main body.

In other words, as the traction force increases, which would tend to diverge the body of the carabiner apart, the closing element deforms so as to constitute structural stiffening for said carabiner.

The bent and crossed wire structure therefore ensures mechanical strength and at the same time lightness, and therefore low inertia.

Furthermore, the carabiner according to the present invention is particularly economical to make insofar as it may simply be obtained from a roll of metal wire that is suitably cut and bent.

The presence of the crossing of the branches of the closing element furthermore facilitates and simplifies the action of opening the carabiner by means of the pressure of the finger of the user.

Finally, the bent wire closing element advantageously interfaces with the protrusion (key-lock) of the upper free end of the main body in an easy manner and without undercuts or coupling points that could become entangled with cables, ropes or cords.

A person skilled in the art, for the purpose of satisfying contingent and specific needs, may make numerous modifications and variations to the solutions described above.

The scope of protection of the invention is defined by the following claims.

## Claims

1. Carabiner (4) for a rope, a strap and/or a further carabiner, comprising:
- a main body (8) having a 'C' configuration, between a lower free end (12) and an upper free end (16) which identify an inlet opening (20) for the insertion of a cord or rope, the upper free end (16) being provided with at least one protrusion (28),
- a closing element (32), wedged in said lower free end (12) and configured so as to elastically pass from a closing configuration, in which said lower free end (12) and said upper free end (16) connect together, so as to prevent the passage of the rope through the inlet opening (20), to an opening configuration in which it deviates at least partially from the protrusion (28) of the upper free end (16) so as to allow the passage of the rope through the inlet opening (20),
- wherein the closing element (32) comprises a first branch (36) and a second branch (40), having a first lower interlocking end (44) and a second lower interlocking end (48), respectively, interlocked to the lower free end (12) of the main body (8), and a second upper closing end (52) which, in a closing configuration, makes a shape coupling with said protrusion (28),
- wherein said first branch (36) and second branch (40) are arranged in an X-shaped configuration, crossing at an intersecting point (56), on opposite sides with respect to a centreline plane (M-M) of the carabiner (4) connecting the upper free end (16) and the lower free end (12),
- wherein the upper closing ends (52) of said branches (36,40) are connected to each other by means of an arc-shaped portion (60) which at least partially embraces said protrusion (28), in a closing configuration, on the side of the main body (8), said arc-shaped portion (60) also making a front undercut which opposes the rotation of the closing element (32) on the side opposite the main body (8).

2. Carabiner (4) according to claim 1, wherein said intersecting point (56) is a middle point between the lower free end (12) and the upper free end (16) of the carabiner body (8).

3. Carabiner (4) according to claim 1 or 2, wherein at said intersecting point (56), said first branch (36) and second branch (40) overlap in contact with each other.

4. Carabiner (4) according to claim 1, 2 or 3, wherein at said intersecting point (56), said first branch (36) and second branch (40) are mechanically connected to each other.

5. Carabiner (4) according to claim 3 or 4, wherein said protrusion (28) makes an undercut with respect to a vertical direction (Y-Y), parallel to said centreline plane (M-M) of the carabiner (4), so as to oppose a divergence of the lower free end (12) and of the upper free end (16) along a vertical direction (Y-Y) parallel to said centreline plane (M-M).

6. Carabiner (4) according to any one of claims 1 to 5, wherein said first branch (36) and second branch (40) are integrally formed with each other.

7. Carabiner (4) according to any one of claims 1 to 6, wherein said first branch (36) and second branch (40) are made by bending a single wire having a constant section.

8. Carabiner (4) according to any one of claims 1 to 7, wherein said first branch (36) and second branch (40) have a constant section.

9. Carabiner (4) according to claim 8, wherein said section of the first branch (36) and of the second branch (40) is circular or elliptical.

10. Carabiner (4) according to claim 8, wherein said section is rectangular or square.

11. Carabiner (4) according to any one of claims 1 to 10, wherein said arc-shaped portion (60) has a necking (64) which at least partially embraces the upper free end (16) in a closing configuration of the carabiner (4).

12. Carabiner (4) according to any one of claims 1 to 11, wherein said first lower interlocking ends (44) and second lower interlocking ends (48) are interlocked to the lower free end (12) of the main body (8), from opposite parts with respect to said centreline plane (M-M) of the carabiner (4).

13. Carabiner (4) according to any one of claims 1 to 12, wherein said first lower interlocking ends (44) and second lower interlocking ends (48) are interlocked at the lower free end (12) of the main body (8), in staggered positions from each other along a vertical direction (Y-Y) parallel to said centreline plane (M-M) of the carabiner (4).

14. Carabiner (4) according to any one of claims 1 to 13, wherein, in a closing configuration, a clearance or gap (66) is provided between the arc-shaped portion (60) and the protrusion (28) with respect to a vertical direction Y-Y, parallel to said centreline plane (M-M) of the carabiner (4).

## Patentansprüche

1. Karabiner (4) für eine Schnur, einen Gurt und/oder einen weiteren Karabiner, umfassend:
- einen Hauptkörper (8), der zwischen einem unteren freien Ende (12) und einem oberen freien Ende (16), die eine Eingangsöffnung (20) zum Einsetzen einer Schnur oder eines Seils bestimmen, eine 'C'-Konfiguration aufweist, wobei das obere freie Ende (16) mit mindestens einem Vorsprung (28) versehen ist,
- ein Schließelement (32), das in das untere freie Ende (12) eingekeilt ist und so ausgestaltet ist, dass es von einer Schließkonfiguration, in der das untere freie Ende (12) und das obere freie Ende (16) miteinander verbunden sind, sodass der Durchtritt der Schnur durch die Eingabeöffnung (20) verhindert ist, elastisch in eine Öffnungskonfiguration übergeht, in der es sich zumindest teilweise von dem Vorsprung (28) des oberen freien Endes (16) entfernt, sodass der Durchtritt der Schnur durch die Eingangsöffnung (20) ermöglicht ist,
- wobei das Schließelement (32) einen ersten Schenkel (36) und einen zweiten Schenkel (40) umfasst, die jeweils ein erstes unteres Verriegelungsende (44) und ein zweites unteres Verriegelungsende (48), die mit dem unteren freien Ende (12) des Hauptkörpers (8) verriegelt sind, und ein zweites oberes Schließende (52), das, in einer Schließkonfiguration, eine Formkopplung mit dem Vorsprung (28) herstellt, aufweisen,
- wobei der erste Schenkel (36) und der zweite Schenkel (40) in einer X-förmigen Konfiguration, sich an einem Kreuzungspunkt (56) überkreuzend, auf entgegengesetzten Seiten in Bezug auf eine Mittellinienebene (M-M) des Karabiners (4) angeordnet sind und das obere freie Ende (16) und das untere freie Ende (12) verbinden,
- wobei die oberen Schließenden (52) der Schenkel (36, 40) mittels eines bogenförmigen Abschnitts (60) miteinander verbunden sind, der, in einer Schließkonfiguration, den Vorsprung (28) zumindest teilweise auf der Seite des Hauptkörpers (8) umklammert, wobei der bogenförmige Abschnitt (60) außerdem eine vordere Hinterschneidung bildet, die der Drehung des Schließelements (32) auf der Seite entgegengesetzt zu dem Hauptkörper (8) entgegenwirkt.

2. Karabiner (4) nach Anspruch 1, wobei der Kreuzungspunkt (56) ein Mittelpunkt zwischen dem unteren freien Ende (12) und dem oberen freien Ende (16) des Karabinerkörpers (8) ist.

3. Karabiner (4) nach Anspruch 1 oder 2, wobei sich der erste Schenkel (36) und der zweite Schenkel (40) an dem Kreuzungspunkt (56) in Berührung miteinander überlagern.

4. Karabiner (4) nach Anspruch 1, 2 oder 3, wobei der erste Schenkel (36) und der zweite Schenkel (40) an dem Kreuzungspunkt (56) mechanisch miteinander verbunden sind.

5. Karabiner (4) nach Anspruch 3 oder 4, wobei der Vorsprung (28) in Bezug auf eine vertikale Richtung (Y-Y), parallel zu der Mittellinienebene (M-M) des Karabiners (4), eine Hinterschneidung bildet, sodass einer Divergenz des unteren freien Endes (12) und des oberen freien Endes (16) entlang einer vertikalen Richtung (Y-Y) parallel zu der Mittellinienebene (M-M) entgegengewirkt wird.

6. Karabiner (4) nach einem beliebigen der Ansprüche 1 bis 5, wobei der erste Schenkel (36) und der zweite Schenkel (40) einstückig miteinander ausgebildet sind.

7. Karabiner (4) nach einem beliebigen der Ansprüche 1 bis 6, wobei der erste Schenkel (36) und der zweite Schenkel (40) durch Biegen eines einzelnen Drahts mit konstantem Querschnitt hergestellt sind.

8. Karabiner (4) nach einem beliebigen der Ansprüche 1 bis 7, wobei der erste Schenkel (36) und der zweite Schenkel (40) einen konstanten Querschnitt aufweisen.

9. Karabiner (4) nach Anspruch 8, wobei der Querschnitt des ersten Schenkels (36) und des zweiten Schenkels (40) kreisförmig oder elliptisch ist.

10. Karabiner (4) nach Anspruch 8, wobei der Querschnitt rechteckig oder quadratisch ist.

11. Karabiner (4) nach einem beliebigen der Ansprüche 1 bis 10, wobei der bogenförmige Abschnitt (60) eine Verengung (64) aufweist, die das obere freie Ende (16) in einer Schließkonfiguration des Karabiners (4) zumindest teilweise umklammert.

12. Karabiner (4) nach einem beliebigen der Ansprüche 1 bis 11, wobei die ersten unteren Verriegelungsenden (44) und die zweiten unteren Verriegelungsenden (48) ausgehend von entgegengesetzten Teilen in Bezug auf die Mittellinienebene (M-M) des Karabiners (4) mit dem unteren freien Ende (12) des Hauptkörpers (8) verriegelt sind.

13. Karabiner (4) nach einem beliebigen der Ansprüche 1 bis 12, wobei die ersten unteren Verriegelungsenden (44) und die zweiten unteren Verriegelungsenden (48) an dem unteren freien Ende (12) des Hauptkörpers (8) in zueinander versetzten Positionen entlang einer vertikalen Richtung (Y-Y) parallel zu der Mittellinienebene (M-M) des Karabiners (4) verriegelt sind.

14. Karabiner (4) nach einem beliebigen der Ansprüche 1 bis 13, wobei, in einer Schließkonfiguration, eine Lücke oder ein Spalt (66) zwischen dem bogenförmigen Abschnitt (60) und dem Vorsprung (28) in Bezug auf eine vertikale Richtung Y-Y parallel zu der Mittellinienebene (M-M) des Karabiners (4) vorgesehen ist.

## Revendications

1. Mousqueton (4) pour une corde, une bretelle et/ou un autre mousqueton, comprenant :
- un corps principal (8) ayant une configuration en « C » entre une extrémité inférieure libre (12) et une extrémité supérieure libre (16) qui identifient une ouverture d'entrée (20) pour l'insertion d'un cordon ou d'une corde, l'extrémité supérieure libre (16) étant pourvue d'au moins une saillie (28),
- un élément de fermeture (32) situé dans ladite extrémité inférieure (12) et configuré pour passer élastiquement d'une configuration de fermeture dans laquelle l'extrémité inférieure libre (12) et l'extrémité supérieure libre (16) se lient afin d'éviter le passage de la corde à travers l'ouverture d'entrée (20), à une configuration d'ouverture dans laquelle il dévie au moins partiellement de la saillie (28) de l'extrémité supérieure libre (16) afin de permettre le passage de la corde à travers l'ouverture d'entrée (20),
- dans lequel l'élément de fermeture (32) comprend une première branche (36) et une deuxième branche (40) ayant une première extrémité inférieure de fermeture (44) et une deuxième extrémité inférieure de fermeture (48) enclenchées respectivement dans l'extrémité inférieure libre (12) du corps principal (8) et une deuxième extrémité supérieure de fermeture (52) qui, dans une configuration de fermeture, fait un couplage de forme avec la saillie (28),
- dans lequel lesdites première branche (36) et deuxième branche (40) sont agencées en une configuration en forme de X se croisant à un point d'intersection (56) sur des côtés opposés par rapport à un plan centré (M-M) du mousqueton (4) reliant l'extrémité supérieure libre (16) à l'extrémité inférieure libre (12),
- dans lequel les extrémités supérieures de fermeture (52) desdites branches (36, 40) sont reliées l'une à l'autre moyennant une partie en forme d'arc (60) qui entoure au moins partiellement ladite saillie (28) dans une configuration de fermeture du côté du corps principal (8), ladite partie en forme d'arc (60) formant aussi une contre-dépouille avant qui s'oppose à la rotation de l'élément de fermeture (32) du côté opposé du corps principal (8).

2. Mousqueton (4) selon la revendication 1, dans lequel ledit point d'intersection (56) est un point central entre l'extrémité libre inférieure (12) et l'extrémité libre supérieure (16) du corps de mousqueton (8).

3. Mousqueton (4) selon la revendication 1 ou 2, dans lequel ledit point d'intersection (56), ladite première branche (36) et ladite deuxième branche (40) se chevauchent en contact des uns avec les autres.

4. Mousqueton (4) selon la revendication 1, 2 ou 3, dans lequel audit point d'intersection (56), ladite première branche (36) et ladite deuxième branche (40) sont reliées mécaniquement l'une à l'autre.

5. Mousqueton (4) selon la revendication 3 ou 4, dans lequel la saillie (28) a une contre-dépouille par rapport à une direction verticale (Y-Y) parallèle audit plan centré (M-M) du mousqueton (4) de façon a faire effet d'une divergence entre l'extrémité libre inférieure (12) et l'extrémité libre supérieure (16) le long d'une direction verticale (Y-Y) parallèle audit plan centré (M-M).

6. Mousqueton (4) selon l'une des revendications 1 à 5, dans lequel ladite première branche (36) et ladite deuxième branche (40) sont formées entièrement l'une avec l'autre.

7. Mousqueton (4) selon l'une des revendications 1 à 6, dans lequel ladite première branche (36) et ladite deuxième branche (40) sont faites par pliage d'un seul fil métallique ayant une section transversale constante.

8. Mousqueton (4) selon l'une des revendications 1 à 7, dans lequel ladite première branche (36) et ladite deuxième branche (40) ont une section transversale constante.

9. Mousqueton (4) selon la revendication 8, dans lequel la section transversale de ladite première branche (36) et de ladite deuxième branche (40) est circulaire ou elliptique.

10. Mousqueton (4) selon la revendication 8, dans lequel ladite section transversale est rectangulaire ou carrée.

11. Mousqueton (4) selon l'une des revendications 1 à 10, dans lequel ladite partie en forme d'arc (60) a une partie de contact (64) qui, dans une configuration de fermeture du mousqueton (4), entoure l'extrémité supérieure libre (16).

12. Mousqueton (4) selon l'une des revendications 1 à 11, dans lequel lesdites première extrémité de fermeture (44) et deuxième extrémité de fermeture (48) sont reliées à l'extrémité inférieure libre (12) du corps principal (8) à partir de parties opposées par rapport au plan centré (M-M) du mousqueton (4).

13. Mousqueton (4) selon l'une des revendications 1 à 12, dans lequel lesdites première extrémité de fermeture (44) et deuxième extrémité de fermeture (48) sont reliées à l'extrémité inférieure libre (12) du corps principal (8) dans des positions décalées l'une de l'autre le long d'une direction verticale (Y-Y) parallèle audit plan centré (M-M) du mousqueton (4).

14. Mousqueton (4) selon l'une des revendications 1 à 13, dans lequel, dans une configuration de fermeture, un espace ou vide (66) est prévu entre la partie en forme d'arc (60) et la saillie (28) par rapport à une direction verticale (Y-Y) parallèle audit plan centré (M-M) du mousqueton (4).
